# EUROPÄISCHE PATENTSCHRIFT

(11) **EP 1 999 830 B1**
(45) Veröffentlichungstag und Bekanntmachung des Hinweises auf die Patenterteilung: **14.01.2015**
(21) Anmeldenummer: 07726984.3
(22) Anmeldetag: 16.03.2007
(51) Int. Cl.: H02B 1/32

(54) **GERÄTEEINBAUSATZ ZUR ANORDNUNG EINES GERÄTES IN EINER ELEKTRISCHEN SCHALTANLAGE**
APPLIANCE INSTALLATION KIT FOR ARRANGEMENT OF AN APPLIANCE IN AN ELECTRICAL SWITCHGEAR ASSEMBLY
MODULE DE MONTAGE DESTINE A INSTALLER UN APPAREIL DANS UNE INSTALLATION DE COMMUTATION ELECTRIQUE

(30) Priorität: 30.03.2006 DE 102006015317
(43) Veröffentlichungstag der Anmeldung: 10.12.2008
(73) Patentinhaber: Siemens Aktiengesellschaft, 80333 München (DE)
(72) Erfinder: HAAS, Volker, 06804 Muldenstein (DE); GOHLICKE, Kay, 04157 Leipzig (DE)
(86) Internationale Anmeldenummer: PCT/EP2007/052505
(87) Internationale Veröffentlichungsnummer: WO 2007/113094

(56) Entgegenhaltungen:
- EP-A- 1 587 191
- EP-A1- 0 668 644
- FR-A1- 2 259 458
- US-A- 4 689 722

## Beschreibung

Die Erfindung betrifft einen Geräteeinbausatz zur Anordnung eines Gerätes in einer elektrischen Schaltanlage gemäß dem Oberbegriff des Anspruchs 1.

In elektrischen Schaltanlagen, zum Beispiel Niederspannungsschaltanlagen, werden elektrische Geräte üblicherweise mittels Einbausätze an Gestellen der Schaltanlagen befestigt. Die Befestigung erfolgt über feste lösbare Verbindungen. Eine verbreitete Einbautechnik ist es, ein Gerät an einem Geräteträger mittels Schraubverbindungen an senkrechten Holmen eines Schaltschrankes anzuschrauben. Aus Arbeitsschutzgründen sowie zur besseren optischen Aufteilung der Schaltanlage bzw. des Schaltschrankes ist es außerdem üblich, Unterteilungen, zum Beispiel in Plattenform, in den Schaltanlagen anzuordnen. Diese Unterteilungen weisen an bestimmten Stellen Ausnehmungen bzw. Durchbrüche zur Hindurchführung von Leitungen auf. Bei Einbausystemen, die nur an bestimmten Positionen in der Schaltanlage montiert werden können, kann es daher zu Einbauproblemen mit in ihren Abmessungen festgelegten Unterteilungen kommen, wenn das Einbausystem und die Unterteilungen nicht genau aufeinander abgestimmt sind.

Des Weiteren sind gattungsgemäße Einbausysteme oftmals entsprechend bestimmter Einbautiefen oder -positionen im Schaltschrank dimensioniert. Diese Einbausätze lassen sich nur mit Anpassungsaufwand in andere, ursprünglich nicht für die Aufnahme dieser Einbausysteme vorgesehene Schaltschränke integrieren. Um diesen Anpassungsaufwand zu mindern oder zu vermeiden, muss also entsprechend der Anzahl unterschiedlicher Schaltschrankmodelle auch eine entsprechende Vielfalt von unterschiedlichen Einbausystemen zur Verfügung stehen.

Aus dem Dokument DE 39 17 985 A1 ist ein Schaltschrank bekannt, bei dem auf an einem Gestell des Schaltschrankes befestigten Stützträgern eine Traverse angeordnet ist. Die Traverse dient u. a. zur Befestigung von Geräten im Schaltschrank. Die Verbindung zwischen Stützträgern und rechtwinklig daran angeschlossener Traverse erfolgt mittels Verschraubungen. Ebenfalls werden die Stützträger an ihren Enden mit dem Gestell des Schaltschrankes verschraubt. Eine Montage der Stützträger an das Gestell sowie auch der Traverse an die Stützträger ist daher dahingehend erschwert, dass vor Herstellung der jeweiligen Schraubverbindungen die Stützträger bzw. die Traverse durch den Monteur in Montageendposition gehalten werden muss. Dies erfordert entweder eine zusätzliche Belastung für den Monteur oder das Erfordernis der Hinzuziehung eines weiteren Monteurs.

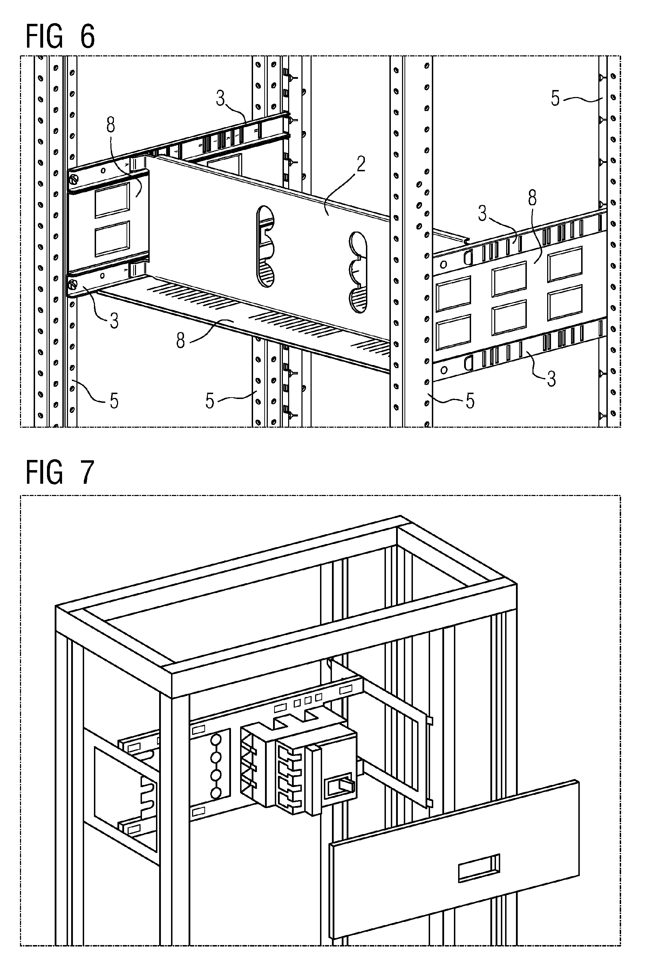

Den für die Erfindung nächstliegenden Stand der Technik bildet die in Figur 7 dargestellte Geräteeinbaueinrichtung. Bei dieser Geräteeinbaueinrichtung ist ein Gerät an einen im Wesentlichen als Platte ausgestalteten Geräteträger befestigt. Diese Platte ist an zwei seitlichen senkrecht zur Plattenfläche verlaufenden Stützträgern befestigt. Die beiden Stützträger sind jeweils an ihren Enden mit dem Gestell eines Schaltschrankes verbunden. Wie in dieser Figur 7 dargestellt, kann die Befestigung des Geräteträgers an den Stützträgern jeweils nur in einer Position erfolgen. Des Weiteren ist ersichtlich, dass die Stützträger dieselbe Breite wie der Geräteträger bzw. die zur Befestigung dienende Platte aufweist. Es ist ersichtlich, dass durch die feste Vorgabe der Position des Geräteträgers in der Schaltanlage keine ortsflexible Montage des Gerätes möglich ist. Des Weiteren wird durch die breite Gestaltung der Stützträger eine relativ große Fläche am Gestell der Schaltanlage abgedeckt, so dass in diesem Bereich die Anbringung von Unterteilungen erschwert wird. Eine Anpassung der Position des Gerätes bzw. des gesamten Einbausystems an eventuell in der Schaltanlage bestehende Restriktion ist daher in dieser in Figur 7 gezeigten Ausführungsform nur eingeschränkt möglich.

In der US 4,689,722 A ist ein Schaltschrank beschrieben, der mit einer Montageplatte versehen ist. Der Schaltschrank setzt sich aus Rahmenschenkeln zusammen und ist mittels Wandelementen und einer Schranktür verschließbar. Die Montageplatte ist parallel zur Rückwand am Rahmengestell befestigbar.

Der Erfindung liegt daher die Aufgabe zugrunde, einen Geräteeinbausatz zur Verfügung zu stellen, der flexibel eine einfache Montage von unterschiedlichen Geräten und Unterteilungen in einer Schaltanlage ermöglicht.

Die Aufgabe wird durch die im Anspruch 1 genannten Merkmale erfindungsgemäß gelöst. Vorteilhafte Ausgestaltungen sind in den Unteransprüchen angegeben.

Es wird ein Geräteeinbausatz zur Anordnung eines Gerätes in einer elektrischen Schaltanlage zur Verfügung gestellt, der einen Geräteträger mit mindestens einer Befestigungsfläche zur Befestigung eines Gerätes und an dem Geräteträger lösbar befestigte und senkrecht zur Befestigungsfläche angeordnete Stützträger aufweist, wobei an dem Geräteträger derart vier Stützträger angeschlossen sind, dass deren Anschlusspunkte am Geräteträger im Wesentlichen in einer parallel zur Befestigungsfläche stehenden Ebene ein Viereck ergeben. Die Verbindung des Geräteträgers ist mit zwei in einer gemeinsamen waagerechten oder senkrechten Ebene angeordneten Stützträgern mittels Steckverbindung realisiert, und die Verbindung mit den anderen beiden Stützträgern ist mittels jeweils eines Klemmwinkelelementes realisiert, dessen einer Winkelschenkel durch den Stützträger hindurch gesteckt ist und dessen anderer Winkelschenkel mit dem Geräteträger verschraubt ist. Die beiden Winkelschenkel sind stumpfwinklig zueinander angeordnet und am Klemmwinkelelement ist mindestens ein im Wesentlichen trapezförmiger Vorsprung angeordnet, dessen einer Schenkel parallel zu dem durch den Stützträger hindurch gesteckten Winkelschenkel verläuft. Für die Verbindung des Geräteträgers mit den Stützträgern müssen dadurch nur die Klemmwinkelelemente bewegt werden und nicht der gesamte Geräteträger.

Durch den Anschluss von vier Stützträgern an den Geräteträger wird bei relativ schmaler Ausführungsform der Stützträger wenig Montageplatz für den Anbau des Geräteeinbausatzes in der Schaltanlage benötigt. Die Befestigungspunkte der vier Stützträger am Geräteträger befinden sich dabei im Wesentlichen in einer Ebene. Bei einer Ausführung des Geräteträgers als Platte, entspricht diese Befestigungsebene der Fläche des Geräteträgers. In einer alternativen Ausführungsform ist vorgesehen, dass die Befestigungspunkte des Stützträgers in einer Ebene angeordnet sind, die parallel in einem gewissen Abstand zur Fläche des Geräteträgers steht. An jeweils zwei der Stützträger ist der Geräteträger mittels einer Steckverbindung befestigt. Diese beiden Stützträger liegen dabei in einer Ebene. Das heißt, dass bei einer Anordnung der Stützträger am Geräteträger an Befestigungspunkten, die ein Rechteck bilden, der Geräteträger entweder mit zwei senkrecht benachbarten Stützträgern mittels Steckverbindung verbunden ist oder mit zwei waagerecht benachbarten Stützträgern verbunden ist. Eine Steckverbindung zwischen Geräteträger und sich diagonal im Rechteck gegenüberliegenden Stützträgern ist nicht vorgesehen. Die Verbindung des Geräteträgers mit den zwei verbleibenden Stützträgern erfolgt mittels eines Klemmwinkelelementes, das in den jeweiligen Stützträger eingesteckt und in einer Winkelposition verklemmt ist und an das mittels einer Schraubverbindung der Geräteträger befestigt wird. Es ergibt sich daher, dass z. B. bei Herstellung einer Steckverbindung zwischen Geräteträger und senkrecht benachbarten Stützträgern eine Schraubverbindung zwischen Geräteträgern und den anderen beiden senkrecht benachbarten Stützträgern erfolgt. Diese Ausgestaltung dient in erster Linie einer einfacheren Montage, da durch das Einstecken des Geräteträgers in zwei Stützträger ein Ende des Geräteträgers bereits in seiner Montage-Endposition gehalten ist. Diese Fixierung erleichtert dem Monteur die weitere Montage des Geräteträgers, die darin besteht, die Klemmwinkelelemente in jeweils einen Schlitz eines Stützträgers einzustecken und den Geräteträger an den Klemmwinkelelementen zu verschrauben.

Mit der Herstellung von Steckverbindungen zwischen Geräteträger und horizontal benachbarten Stützträgern wird es ermöglicht, den Geräteträger samt Gerät zuerst mittels der Steckverbindungen in die Stützträger einzuhängen, so dass keine weitere Kraft oder Hilfsmittel benötigt wird, um den Geräteträger in seiner Einbauhöhe zu fixieren. Der Monteur kann somit in einfacher Weise die Schraubverbindungen zwischen dem Geräteträger und den beiden anderen horizontal benachbarten Stützträgern herstellen.

Bei Steckverbindungen zwischen dem Geräteträger und senkrecht benachbarten Stützträgern ist ebenfalls bereits eine höhenmäßige Positionierung des Geräteträgers dadurch erreicht, dass Schlitze, in die die Enden des Geräteträgers eingesteckt sind, einer unbeabsichtigten Verschiebung des Geräteträgers in senkrechter Richtung entgegenwirken. Dadurch wird ebenfalls dem Monteur die Herstellung der Schraubverbindungen zu den anderen beiden senkrecht benachbarten Stützträgern erleichtert.

Des Weiteren lassen sich in vorteilhafter Weise durch die Kombination von Steck- und Schraubverbindungen etwaige Breitentoleranzen des Geräteträgers bzw. der Schaltanlage ausgleichen.

Außerdem können unterschiedliche Stützträger mit unterschiedlichen Geräteträgern für bestimmte Schaltschrankformen bzw. Schaltanlagen kombiniert werden. In Abhängigkeit von der Geometrie eines Schaltschrankes können so z. B. Geräteträger mit unterschiedlichen Höhen- oder Breitenmaßen mit Stützträgern genormter Länge verbunden werden. Somit lassen sich flexibel unterschiedliche Einbaupositionen des Gerätes bzw. des Geräteträgers in einer Schaltanlage erreichen, wobei ein nur minimaler Montageaufwand durch Steckverbindungen und wenigen Schraubverbindungen besteht. Die Kombination von Steck- und Schraubverbindungen vereint dabei den Vorteil des Herstellens einer schnellen (Steck)-Verbindung, mit dem Vorteil des Herstellens einer festen und lösbaren Verbindung.

In einer vorteilhaften Ausgestaltung sind die Stützträger derart ausgebildet, dass sie mit jeweils einem Ende in einer Öffnung im Gestell einer Schaltanlage einsteckbar sind und mit dem anderen Ende an das Gestell der Schaltanlage anschraubbar sind. Zu diesem Zweck bieten sich Stützträger mit L- oder U-Profil an, an deren einem Ende zur Herstellung der Steckverbindung z. B. eine einfache starre Lasche angeordnet ist und zur Herstellung der Schraubverbindung am anderen Ende z. B. eine Bohrung angeordnet ist, durch die ein Bolzen zur Herstellung der Schraubverbindung hindurchgeführt werden kann.

Die Lasche ist dabei als eine einfache glatt ausgeführte Blechzunge ausgestaltet. Diese Ausführungsform erleichtert im Wesentlichen die Einsteckung der Lasche in ein Schlitz im Gestell.

In einer alternativen Ausgestaltung ist die Lasche in einer hakenähnlichen Form ausgeführt. Das bedeutet, dass eine im Wesentliche glatt ausgeführte Blechzunge ein hakenähnliches Profil aufweist. Dieses hakenähnliche Profil bewirkt eine leichte Fixierung der Lasche im Schlitz des Gestelles.

Des Weiteren weist jeder der Stützträger in vorteilhafter Weise eine Vielzahl von in Reihe angeordneter Schlitze auf. Diese Schlitze verlaufen im Stützträger senkrecht zu dessen Längserstreckungsrichtung. Durch die Anordnung dieser Vielzahl von Schlitzen ist es möglich, das jeweilige Einsteckende des Geräteträgers oder auch das Klemmwinkelelement in unterschiedlichen Positionen an dem jeweiligen Stützträger zu befestigen. Dadurch kann der Geräteträger in verschiedenen Einbautiefen im Schaltschrank positioniert werden.

Bei einer in üblicher Weise an der Frontseite einer Schaltanlage bzw. eines Schaltschrankes angeordneten Feldabdeckung kann daher in Abhängigkeit der Einbautiefe des Gerätes in der Schaltanlage die Bedienung des Gerätes hinter, durch, oder auch auf der Feldabdeckung erfolgen.

In weiterer Ausgestaltung ist vorgesehen, dass jeder der Schlitze in den Stützträgern eine jeweils unterschiedliche Markierung aufweist. Das bedeutet, dass jedem der Schlitze eine individuelle Markierung im Stützträger zugeordnet ist. Entsprechend der Reihenfolge der Schlitze in dem Stützträger können diese z. B. mit A, B, C, D usw. bezeichnet sein. Diese Markierungen erleichtern in einfacher Weise eine exakte Positionierung des Gerätes in der Schaltanlage dadurch, dass beim Einstecken des Geräteträgers in Schlitze mit einer bestimmten Markierung das Auffinden der entsprechenden Schlitze in den anderen beiden auf der gegenüberliegenden Seite angeordneten Stützträgern, die an den entsprechenden Schlitzen dieselben Markierungen aufweisen, wesentlich erleichtert wird. Des Weiteren kann durch diese Markierung in einfacher Weise eine Montageanleitung erfolgen, z. B. indem vorgegeben wird, dass der Geräteträger in den mit "F" bezeichneten Schlitzen zu befestigen ist.

In vorteilhafter Weise ist vorgesehen, dass an den Enden der Stützträger, die mittels Steckverbindung mit dem Gestell der Schaltanlage zu verbinden sind, Laschen angeformt sind, die in Schlitze im Gestell der Schaltanlage einsteckbar sind. Die Laschen an den Stützträgerenden können dabei waagerecht, senkrecht oder schräg, in Abhängigkeit der im Gestell vorhandenen Schlitze, angeordnet sein.

An den Enden der Stützträger, die mittels Schraubverbindungen mit dem Gestell der Schaltanlage zu verbinden sind, können vorteilhafterweise Bohrungen zur Aufnahme einer Schraubverbindung vorgesehen sein. Durch diese Bohrungen lassen sich z. B. Schrauben zur Herstellung der Schraubverbindungen hindurchführen.

Vorzugsweise ist der Geräteträger als Rechteckplatte ausgeführt. Auf dieser Platte ist mit herkömmlicher Befestigungstechnik das zu montierende Gerät befestigt. Die vier Stützträger können dabei direkt an den Eckpunkten der rechteckigen Platte befestigt sein. Alternativ kann auch vorgesehen sein, dass die Platte im Wesentlichen an ihren Eckpunkten Ausleger aufweist, an denen in einem gewissen Abstand zur Plattenfläche die Stützträger befestigt werden.

In vorteilhafter Weise wird die Steckverbindung zwischen Geräteträger und Stützträger mittels Einsteckung einer am Geräteträger angeordneten zweimalig in eine gestreckte S-Form gewinkelten Lasche in einen entsprechend der Laschenbreite dimensionierten Schlitz im Stützträger realisiert. Zur Einsteckung dieser winklig geformten Lasche ist es erforderlich, dass der Geräteträger in einer derart winkligen Position zum Stützträger positioniert ist, dass der äußere Winkelschenkel der gewinkelten Lasche im Wesentlichen senkrecht zur Längserstreckungsrichtung des Stützträgers steht. In dieser Position kann durch eine einfache translatorische Bewegung der Geräteträger bzw. das freie Ende der abgewinkelten Lasche in den Schlitz im Stützträger eingeschoben werden. Durch eine Schwenkbewegung des Geräteträgers um den Schlitz in die Montageendposition verdreht sich ebenfalls das freie Ende der winkligen Lasche derart, dass es in der Montageendposition schräg im Schlitz im Stützträger steckt. Bis auf die genannte Schwenkbewegung sind dem Geräteträger durch diese Einsteckung bereits sämtliche Bewegungsmöglichkeiten genommen.

In dem Schenkel, der mit dem Geräteträger zu verschrauben ist, befindet sich eine Bohrung zur Aufnahme einer Schraubverbindung. An dem die Bohrung aufweisenden Schenkel des Klemmwinkelelementes ist der mindestens eine im Wesentlichen trapezförmiger Vorsprung angeordnet, dessen einer Schenkel parallel zu einem durch den Stützträger hindurch zu steckenden Schenkel des Klemmwinkelelementes verläuft. Diese Ausgestaltung hat den Vorteil, dass das Klemmwinkelelement allein, also ohne an ihm befestigten Geräteträger, in einen Schlitz im Stützträger einschiebbar ist.

Das Klemmwinkelelement ist dann vollständig in seine für die Montage bestimmte Position in den Stützträger eingesteckt, wenn ein Schenkel an einer Seite des Stützträgers anliegt und ein Schenkel des trapezförmigen Vorsprungsseite auf der anderen Seite des Stützträgers an diesem anliegt. In dieser Position sind dem Klemmwinkelelement bereits alle Bewegungsmöglichkeiten bis auf eine Schwenkbewegung um den Schlitz herum genommen.

Vorzugsweise sind am Geräteträger zwei Laschen mit Bohrungen angeordnet, die zur Herstellung von Schraubverbindungen mit den Klemmwinkelelementen dienen.

Solch eine mit einer Bohrung versehene Lasche lässt sich nun in einfacher Weise auf den trapezartigen Vorsprung am Klemmwinkelelement derart auflegen, dass die Bohrung dieser Lasche am Geräteträger sich mit der Bohrung im Schenkel des Klemmwinkelelementes überdeckt. Diese Position des Geräteträgers entspricht bereits der Montage-Endposition, in der der Monteur keine weitere Kraft oder Hilfsmittel ansetzen muss, um den Geräteträger an dieser Position zu halten. Es lassen sich nun in einfacher und komfortabler Weise die Schraubverbindungen zwischen Geräteträger und Klemmwinkelelementen herstellen. Bei einer Ausgestaltung mit zwei parallel zueinander ausgeführten trapezartigen Vorsprüngen am Klemmwinkelelement wird ebenfalls durch das Einschieben der Lasche am Geräteträger zwischen diese beiden Vorsprünge eine unbeabsichtigte Bewegung des Geräteträgers nach oben vermieden.

Vorzugsweise weist die Bohrung am Klemmwinkelelement ein Innengewinde auf. Diese Anordnung eines Innengewindes vermeidet den Montageaufwand für das Aufsetzen einer Mutter auf eine durch die Bohrung in der Lasche des Geräteträgers sowie der Bohrung im Klemmwinkelelement eingesteckten Schraube.

Um die Anbringung von Unterteilungen in der Schaltanlage zu vereinfachen, kann vorgesehen sein, dass der Geräteeinbausatz so gestaltet ist, dass Unterteilungen ein- und ausbaubar sind, ohne den Einbausatz demontieren zu müssen. Insbesondere durch die schmale Ausgestaltung der vier Stützträger ist dies vorteilhaft möglich. Des Weiteren kann vorgesehen sein, dass der Geräteträger dort Aussparungen aufweist, wo üblicherweise Unterteilungen angeordnet werden. Die Unterteilungen sind dabei vorteilhafterweise so ausgestaltet, dass sie an ihrem hinteren Ende, also im Wesentlichen an der Rückwand der Schaltanlage bzw. des Schaltschrankes, in dessen Gestell eingesteckt werden und an der vorderen Seite der Schaltanlage bzw. des Schaltschrankes an dessen Gestell festgeschraubt werden.

Es ist alternativ vorgesehen, dass der Geräteeinbausatz selbst Unterteilungen umfasst. Das bedeutet, dass der bisher beschriebene Geräteeinbausatz um Unterteilungen erweiterbar ist. Der Einbausatz ist in diesem Falle derart gestaltet, dass die Unterteilungen an ihm z. B. mittels Steckverbindungen oder mittels Schraubverbindungen befestigt werden können. Die Unterteilungen können dabei mit Schienen- oder Leitungsdurchführungen versehen sein.

Die Erfindung wird nachfolgend anhand der beiliegenden Zeichnungen erläutert. Es zeigen:
- Figur 1: einen erfindungsgemäßen Geräteeinbausatz im montierten Zustand;
- Figur 2: einen Stützträger vor Einbauposition;
- Figur 3: einen Geräteträger vor der Verbindung mit einem Stützträger mittels Klemmverbindung;
- Figur 4: einen Geräteträger und Klemmwinkelelement vor der Befestigung an einem Stützträger;
- Figur 5: einen zwischen zwei Stützträgern befestigten Geräteträger;
- Figur 6: einen Geräteträger und Unterteilungen im eingebauten Zustand und
- Figur 7: einen Geräteträger gemäß Stand der Technik.

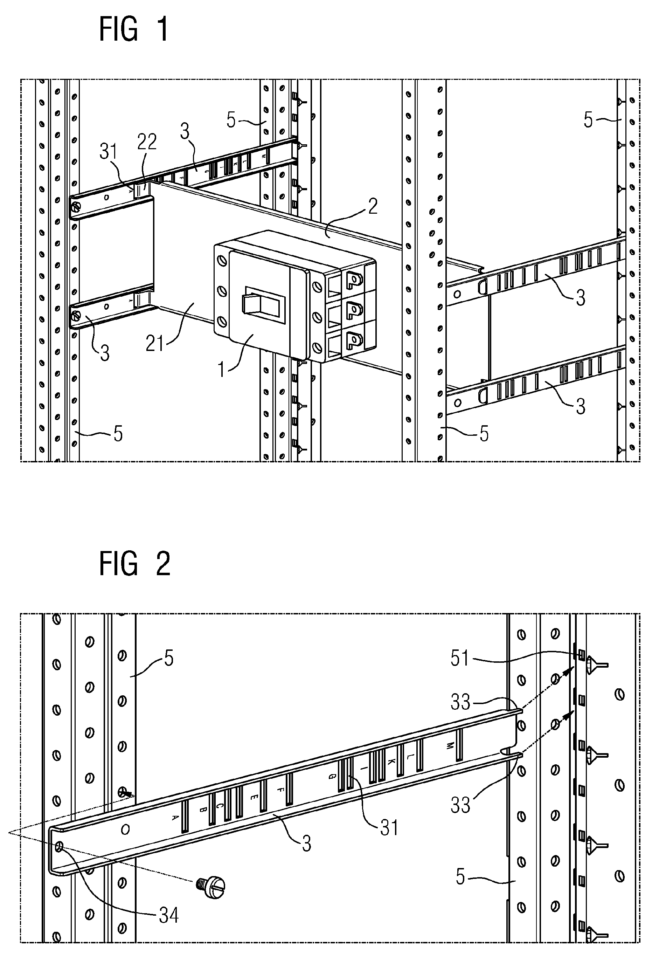

Wie in Figur 1 dargestellt, ist ein elektrisches Gerät 1 auf der Befestigungsfläche 21 eines Geräteträgers 2 befestigt. An jeder der vier Ecken des Geräteträgers 2 ist jeweils ein Stützträger 3 angeordnet. Diese Stützträger 3 sind am Gestell 5 eines Schaltschrankes bzw. einer Schaltanlage befestigt. In der Ansicht von oben ergibt sich durch die Befestigung der Stützträger 3 am Geräteträger 2 insgesamt eine Doppel-T-Anordnung der Träger. In Figur 1 ist der Geräteträger 2 im Wesentlichen in der Mitte der Stützträger 3 und damit auch relativ mittig im Gestell 5 der Schaltanlage angeordnet. Durch die Befestigung des Geräteträgers 2 an anderen Schlitzen 31 im Stützträger 3 können allerdings auch andere Tiefen-Einbaupositionen des Geräteträgers 2 und damit des Gerätes in der Schaltanlage bzw. im Schaltschrank erreicht werden.

Zur Befestigung des Stützträgers 3 wird, wie in Figur 2 dargestellt, dieser an seinem hinteren Ende in Öffnungen 51 des Gestells 5 mit einer Lasche 33 eingesteckt und mit seinem vorderen Ende, welches eine Bohrung 34 aufweist, an das Gestell 5 geschraubt. Diese Verschraubung ist ebenfalls in Figur 1 angedeutet. Durch die bei der Montage zuerst erfolgende Einsteckung des Stützträgers 3 in das Gestell 5 ergibt sich ein bequemes Handling des Stützträgers 3 während der Herstellung der Schraubverbindung an der Bohrung 34 des Stützträgers 3 mit dem Gestell 5.

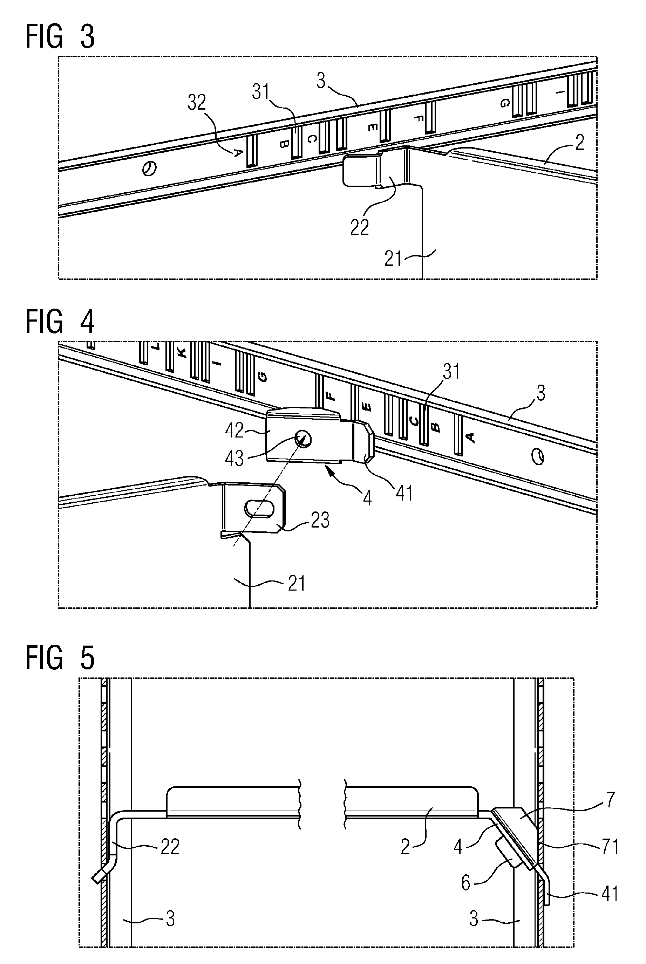

In Figur 3 ist ein Stützträger 3 dargestellt, der Schlitze 31 aufweist, die mit Markierungen 32 versehen sind. Ein Geräteträger 2 ist vor dem Einstecken in einen Schlitz 31 des Stützträgers 3 dargestellt. Eine S-förmig gestaltete Lasche 22 am Geräteträger 2 wird dazu in einen Schlitz 31 im Stützträger 3 eingefädelt. Zu diesem Zweck wird der Geräteträger 2 in einer spitzwinkligen Position zum Stützträger 3 gehalten, so dass das Ende der s-förmigen Lasche 22 im Wesentlichen senkrecht zur Längserstreckungsrichtung des Stützträgers 3 ausgerichtet ist. In dieser Position lässt sich in einfacher Weise das Ende der s-förmigen Lasche in den Schlitz 31 und damit in den Stützträger 3 einführen. Nach erfolgter Einführung des Endabschnittes der s-förmigen Lasche 22 in den Schlitz 31 wird der Geräteträger 2 wieder in eine Position senkrecht zur Längserstreckungsrichtung des Stützträgers 3 zurückgeschwenkt. Die Montageendposition dieser s-förmigen Lasche 22 ist in Figur 5 dargestellt.

Es ist deutlich ersichtlich, dass der Endabschnitt der s-förmigen Lasche 22 schräg im Schlitz 31 steckt und somit eine Klemmung bewirkt.

Die in Figur 3 ersichtlichen Markierungen 32 dienen der Montageerleichterung dahingehend, dass die an diesem Schlitz angetragene Markierung 32 ebenfalls in dieser Position auf anderen Stützträgern aufgefunden werden kann, so dass der Monteur in einfacher Weise die entsprechende Montagestelle an anderen Stützträgern erkennt.

In Figur 4 ist die andere Seite der Befestigung des Geräteträgers 2 mit einem weiteren Stützträger 3 dargestellt. Der Geräteträger 2 weist dazu an einem Eckpunkt eine Lasche 23 mit einer Bohrung auf. Des Weiteren ist das Klemmwinkelelement 4 dargestellt, welches einen Steckschenkel 41 aufweist und stumpfwinklig dazu angeordnet einen Schraubschenkel 42, in dem eine Bohrung 43 eingebracht ist. Zur Montage wird das Klemmwinkelelement mit seinem Steckschenkel 41 durch einen Schlitz 31 im Stützträger 3 eingefädelt. In Montage-Endposition liegt, wie in Figur 5 dargestellt, der Einsteckschenkel 41 am Geräteträger an. Ein am Klemmwinkelelement 4 angeordneter trapezförmiger Vorsprung 7 liegt mit einem Schenkel 71 auf der der Anlageseite des Steckschenkels 41 gegenüberliegenden Seite des Stützträgers 3 an diesem an. Mittels einer Schraubverbindung 6 wird die mit der Bohrung versehene Lasche 23 am Geräteträger 2 am Klemmwinkelelement 4 lösbar befestigt. Bei Ausführung der Bohrung 43 im Klemmwinkelelement 4 mit einem Innengewinde besteht die Schraubverbindung 6 zwischen Geräteträger 2 und Klemmwinkelelement 4 nur aus einer Schraube.

Figur 5 zeigt den Geräteeinbausatz in montierter Position. Dadurch, dass die Schraubverbindung 6 in der Schaltanlage in den Raum vor dem Geräteträger angeordnet ist, lässt sich in einfacher Weise die Schraubverbindung herstellen. Durch die Anlage des Steckschenkels 41 des Klemmwinkelelements 4 an der einen Seite des Stützträgers 3 und der Anlage des Schenkels 71 am trapezförmigen Vorsprung 7 auf der anderen Seite des Stützträgers 3 wird in einfacher Weise eine Lateralbewegung des Geräteträgers 2 zwischen den Stützträgern 3 vermieden. Die Schlitze 31 in den Stützträgern 3 verhindern in Zusammenwirkung mit den in sie schräg eingesteckten Laschen 22 bzw. Schenkeln 42 eine Lateralbewegung in Richtung der Längserstreckung der Stützträger 3.

Wie in Figur 6 dargestellt sind zusätzlich zum Geräteträger 2 weiterhin Unterteilungen 8 am Gestell 5 sowie an den Stützträgern 3 angeordnet. Dadurch, dass die Stützträger 3 durch ihre schlanke Ausführungsform relativ wenig Montageplatz am Gestell 5 erfordern, ist es möglich, großflächige Unterteilungen 8 ebenfalls am Gestell zwischen den Stützträgern 3 anzuordnen. Die Unterteilung 8 kann dabei in vorteilhafter Weise mit dem Gestell 5 verschraubt sein. Des Weiteren können aber auch Unterteilungen 8 an den Geräteeinbausatz derart anmontiert sein, dass die Unterteilung 8 an einem Stützträger befestigt ist. Diese Befestigung der Unterteilung 8 an einem Stützträger 3 erfolgt dabei in ähnlicher Weise wie die Befestigung des Geräteträgers 2 an einem Stützträger 3, also mittels Steck- bzw. Klemm- und Schraubverbindungen.

## Patentansprüche

1. Geräteeinbausatz zur Anordnung eines Gerätes (1) in einer elektrischen Schaltanlage mit einem Geräteträger (2) mit mindestens einer Befestigungsfläche (21) zur Befestigung eines Gerätes (2) und an dem Geräteträger (2) lösbar befestigten und senkrecht zur Befestigungsfläche (21) angeordneten Stützträgern (3),
wobei an dem Geräteträger (2) derart vier Stützträger (3) angeschlossen sind, dass deren Anschlusspunkte am Geräteträger (2) im Wesentlichen in einer parallel zur Befestigungsfläche (21) stehenden Ebene ein Viereck ergeben, und
wobei die Verbindung des Geräteträgers (2) mit zwei in einer gemeinsamen waagerechten oder senkrechten Ebene angeordneten Stützträgern (3) mittels Steckverbindung und die Verbindung mit den anderen beiden Stützträgern (3) mittels jeweils eines Klemmwinkelelementes (4) realisiert sind, der zwei Winkelschenkel (41, 42) aufweist, wobei ein Winkelschenkel (41) durch einen Stützträger (3) hindurch gesteckt und der andere Winkelschenkel (42), in dem sich eine Bohrung (43) zur Aufnahme einer Schraubverbindung (6) befindet, mit dem Geräteträger (2) verschraubt ist,
**dadurch gekennzeichnet,**
**dass** die beiden Winkelschenkel (41, 42) stumpfwinklig zueinander angeordnet sind und am Klemmwinkelelement (4) mindestens ein im Wesentlichen trapezförmiger Vorsprung (7) angeordnet ist, dessen einer Schenkel (71) parallel zu dem durch den Stützträger (3) hindurch gesteckten Winkelschenkel (41) verläuft.

2. Geräteeinbausatz nach Anspruch 1,
**dadurch gekennzeichnet, dass**
die Stützträger (3) derart ausgebildet sind, dass sie mit jeweils einem Ende in Öffnungen (51) im Gestell (5) einer Schaltanlage einsteckbar sind und mit dem anderen Ende an das Gestell (5) der Schaltanlage anschraubbar sind.

3. Geräteeinbausatz nach einem der vorhergehenden Ansprüche,
**dadurch gekennzeichnet, dass**
jeder der Stützträger (3) eine Vielzahl von in Reihe angeordneten Schlitzen (31) aufweist.

4. Geräteeinbausatz nach Anspruch 3,
**dadurch gekennzeichnet, dass**
jeder der Schlitze (31) eine jeweils unterschiedliche Markierung (32) aufweist.

5. Geräteeinbausatz nach einem der vorhergehenden Ansprüche,
**dadurch gekennzeichnet, dass**
an den Enden der Stützträger (3), die mittels Steckverbindung mit dem Gestell (5) der Schaltanlage verbunden sind, Laschen (33) angeformt sind, die in Schlitze im Gestell (5) einsteckbar sind.

6. Geräteeinbausatz nach einem der vorhergehenden Ansprüche,
**dadurch gekennzeichnet, dass**
jeweils an dem Ende des Stützträgers (3), das mittels Schraubverbindung mit dem Gestell (5) der Schaltanlage verbunden sind, eine Bohrung (34) zur Aufnahme einer Schraubverbindung angeordnet sind.

7. Geräteeinbausatz nach einem der vorhergehenden Ansprüche,
**dadurch gekennzeichnet, dass**
der Geräteträger (2) als rechteckige Platte ausgeführt ist.

8. Geräteeinbausatz nach einem der vorhergehenden Ansprüche,
**dadurch gekennzeichnet, dass**
die Steckverbindung mittels Einsteckung einer am Geräteträger (2) angeordneten zweimalig in eine gestreckte S-Form gewinkelten Lasche (22) in einen entsprechend der Laschenbreite dimensionierten Schlitz (31) im Stützträger (3) realisiert ist.

9. Geräteeinbausatz nach einem der vorhergehenden Ansprüche,
**dadurch gekennzeichnet, dass**
am Geräteträger (2) zwei Laschen (23) mit Bohrungen angeordnet sind, die zur Herstellung von Schraubverbindungen mit den Klemmwinkelelementen (4) dienen.

10. Geräteeinbausatz nach einem der vorhergehenden Ansprüche,
**dadurch gekennzeichnet, dass**
die Bohrung (43) im Klemmwinkelelement (4) ein Innengewinde aufweist.

11. Geräteeinbausatz nach einem der vorhergehenden Ansprüche,
**dadurch gekennzeichnet, dass**
der Geräteeinbausatz so gestaltet ist, dass Unterteilungen (8) ein- und ausbaubar sind, ohne den Einbausatz demontieren zu müssen.

12. Geräteeinbausatz nach einem der Ansprüche 1 bis 11,
**dadurch gekennzeichnet, dass**
der Geräteeinbausatz des weiteren Unterteilungen (8) umfasst.

## Claims

1. Appliance installation kit for arrangement of an appliance (1) in an electrical switchgear assembly having an appliance support (2) with at least one attachment surface (21) for attaching an appliance (2) and carrier supports (3) arranged on the appliance support (2) which are detachably attached and perpendicular to the attachment surface (21),
wherein four carrier supports (3) are connected to the appliance support (2) such that their connection points on the appliance support (2) essentially produce a square in a plane parallel to the attachment surface (21), and
wherein the connection of the appliance support (2) to two carrier supports (3) arranged in a common horizontal or perpendicular plane is implemented by means of a plug-in connection and the connection to the other two support carriers (3) is implemented by means of a clamping angle element (4) in each case, which has two angle legs (41, 42), wherein one angle leg (41) is inserted through a support carrier (3) and the other angle leg (42), in which there is a drill hole (43) for accommodating a screw connection (6), is screwed to the appliance support (2),
**characterised in that**
the two angle legs (41, 42) are arranged at an obtuse angle to one another, and arranged on the clamping angle element (4) is at least one essentially trapezoidal projection (7), one leg (71) of which extends parallel to the angle leg (41) inserted through the support carrier (3).

2. Appliance installation kit according to claim 1,
**characterised in that**
the support carriers (3) are designed such that they can be inserted by one end in each case into openings (51) in the rack (5) of a switchgear assembly and by the other end can be screwed to the rack (5) of the switchgear assembly.

3. Appliance installation kit according to one of the preceding claims,
**characterised in that**
each of the support carriers (3) has a plurality of slots (31) arranged in series.

4. Appliance installation kit according to claim 3,
**characterised in that**
each of the slots (31) has a respective different marking (32).

5. Appliance installation kit according to one of the preceding claims,
**characterised in that**
tabs (33) which can be inserted into slots in the rack (5) are integrally moulded onto the ends of the support carriers (3) which are connected to the rack (5) of the switchgear assembly by means of a plug-in connection.

6. Appliance installation kit according to one of the preceding claims,
**characterised in that**
in each case a drill hole (34) for accommodating a screw connection is arranged at the end of the support carrier (3), said end being connected to the rack (5) of the switchgear assembly by means of a screw connection.

7. Appliance installation kit according to one of the preceding claims,
**characterised in that**
the appliance support (2) is implemented as a rectangular plate.

8. Appliance installation kit according to one of the preceding claims,
**characterised in that**
the plug-in connection is implemented by inserting a tab (22) angled twice in an elongated S shape and arranged on the appliance support (2) into a slot (31) in the carrier support (3) dimensioned in accordance with the tab width.

9. Appliance installation kit according to one of the preceding claims,
**characterised in that**
two tabs (23) having drill holes are arranged on the appliance support (2) and serve to produce screw connections to the clamping angle elements (4).

10. Appliance installation kit according to one of the preceding claims,
**characterised in that**
the drill hole (43) has an internal thread in the clamping angle element (4).

11. Appliance installation kit according to one of the preceding claims,
**characterised in that**
the appliance installation kit is designed such that subdivisions (8) can be installed and removed, without having to disassemble the installation kit.

12. Appliance installation kit according to one of claims 1 to 11,
**characterised in that**
the appliance installation kit further comprises subdivisions (8).

## Revendications

1. Module de montage pour mettre un appareil (1) dans une installation de distribution électrique, comprenant un support (2) d'appareil ayant au moins une surface (21) de fixation pour la fixation d'un appareil (2) et des poutrelles (3) d'appui fixées de manière amovible au support (2) d'appareil et disposées perpendiculairement à la surface (21) de fixation,
dans lequel, au support (2) d'appareil, sont raccordées quatre poutrelles (3) d'appui, de manière à ce que leurs points de raccordement au support (2) d'appareil donnent sensiblement un quadrilatère dans un plan parallèle à la surface (21) de fixation et
dans lequel la liaison du support (2) d'appareil à deux poutrelles (3) d'appui, disposées dans un plan commun horizontal ou vertical est réalisée au moyen d'une liaison par enfichage et la liaison aux deux autres poutrelles (3) d'appui au moyen respectivement d'un élément (4) d'équerre de serrage, qui a deux branches (41, 42) d'équerre, l'une des branches (41) de l'équerre étant enfichée dans une poutrelle (3) d'appui et l'autre branche (42) de l'équerre, dans laquelle se trouve un trou (43) de réception d'un vissage (6), étant vissée au support (2) d'appareil, **caractérisé en ce que** les deux branches (41, 42) de l'équerre sont disposées en faisant un angle obtus entre elles et sur l'élément (4) d'équerre de serrage, est prévue au moins une saillie (7) sensiblement trapézoïdale, dont une branche (71) s'étend parallèlement à la branche (41) de l'équerre enfichée dans la poutrelle (3) d'appui.

2. Module de montage suivant la revendication 1,
**caractérisé en ce que**
les poutrelles (3) d'appui sont constituées de manière à pouvoir être enfichées par respectivement une extrémité dans des ouvertures (51) du bâti (5) d'une installation de distribution et à pouvoir être vissées par l'autre extrémité au bâti (5) de l'installation de distribution.

3. Module de montage suivant l'une des revendications précédentes,
**caractérisé en ce que**
chacune des poutrelles (3) d'appui a une pluralité de fentes (31) disposées suivant une rangée.

4. Module de montage suivant la revendication 3,
**caractérisé en ce que**
chacune des fentes (31) a respectivement un repère (32) différent.

5. Module de montage suivant l'une des revendications précédentes,
**caractérisé en ce qu'**aux extrémités des poutrelles (3) d'appui, qui sont reliées au moyen d'une liaison par enfichage au bâti (5) de l'installation de distribution, sont formées des pattes (33), qui peuvent être enfichées dans des fentes du bâti (5).

6. Module de montage suivant l'une des revendications précédentes,
**caractérisé en ce que**
respectivement à l'extrémité de la poutrelle (3) d'appui, qui est reliée au bâti (5) de l'installation de distribution au moyen d'un vissage, est prévu un trou (34) de réception d'un vissage.

7. Module de montage suivant l'une des revendications précédentes,
**caractérisé en ce que**
le support (2) d'appareil est réalisé sous la forme d'une plaque rectangulaire.

8. Module de montage suivant l'une des revendications précédentes,
**caractérisé en ce que**
la liaison par enfichage d'une patte (22), disposée sur le support (2) d'appareil et coudée deux fois dans une forme en S étirée, est réalisée dans une fente (31) de la poutrelle (3) d'appui, dimensionnée en correspondance avec la largeur de la patte.

9. Module de montage suivant l'une des revendications précédentes,
**caractérisé en ce que**,
sur le support (2) d'appareil, sont disposées deux pattes (23) ayant des trous, qui servent à l'obtention de vissages avec les éléments (4) d'équerre de serrage.

10. Module de montage suivant l'une des revendications précédentes,
**caractérisé en ce que**
le trou (43) de l'élément (4) d'équerre de serrage a un taraudage.

11. Module de montage suivant l'une des revendications précédentes,
**caractérisé en ce que**
le module de montage est conformé de manière à pouvoir monter et démonter des cloisonnements (8), sans avoir à démonter le module.

12. Module de montage suivant l'une des revendications 1 à 11, **caractérisé en ce que**
le module de montage comprend en outre des cloisonnements (8).
